# EUROPÄISCHE PATENTSCHRIFT

(11) **EP 2 954 008 B1**
(45) Veröffentlichungstag und Bekanntmachung des Hinweises auf die Patenterteilung: **05.06.2019**
(21) Anmeldenummer: 14702056.4
(22) Anmeldetag: 03.02.2014
(51) Int. Cl.: C08L 77/00, C08L 97/00

(54) **THERMOPLASTISCHE POLYMERCOMPOUNDS MIT NIEDERMOLEKULAREN LIGNINEN, VERFAHREN ZU DEREN HERSTELLUNG, FORMKÖRPER SOWIE VERWENDUNGEN**
THERMOPLASTIC POLYMER COMPOUNDS WITH LOW-MOLECULAR-WEIGHT LIGNINS, A METHOD FOR PRODUCING SAME, MOULDINGS AND USES
COMPOSÉS POLYMÈRES THERMOPLASTIQUES CONTENANT DES LIGNINES DE BAS POIDS MOLÉCULAIRE, PROCÉDÉS DE FABRICATION DE CES COMPOSÉS, CORPS FAÇONNÉS ET UTILISATIONS

(30) Priorität: 11.02.2013 DE 102013002573
(43) Veröffentlichungstag der Anmeldung: 16.12.2015
(73) Patentinhaber: Fraunhofer-Gesellschaft zur Förderung der angewandten Forschung e.V., 80686 München (DE)
(72) Erfinder: ERDMANN, Jens, 14558 Nuthetal OT Saarmund (DE); GANSTER, Johannes, 14469 Potsdam (DE); ENGELMANN, Gunnar, 14478 Potsdam (DE)
(74) Vertreter: Pfenning, Meinig & Partner mbB
(86) Internationale Anmeldenummer: PCT/EP2014/052022
(87) Internationale Veröffentlichungsnummer: WO 2014/122089

(56) Entgegenhaltungen:
- WO-A1-00/27923
- WO-A1-2010/081775
- DE-A1- 19 852 067
- HANSJÖRG NITZ ET AL: "Influence of Lignin Type on the Mechanical Properties of Lignin Based Compounds", MACROMOLECULAR MATERIALS AND ENGINEERING, WILEY VCH VERLAG, WEINHEIM, DE , Bd. 286, Nr. 12 18. Dezember 2001 (2001-12-18), Seiten 737-743, XP002507558, ISSN: 1438-7492, DOI: 10.1002/1439-2054(20011201)286:12<737::AID -MAME737>3.0.CO;2-2 Gefunden im Internet: URL:http://www3.interscience.wiley.com/jou rnal/89010962/abstract [gefunden am 2008-12-09]
- KUBO S ET AL: "Poly(ethylene oxide)/organosolv lignin blends: Relationship between thermal properties, chemical structure, and blend behavior", MACROMOLECULES, AMERICAN CHEMICAL SOCIETY, US, vol. 37, no. 18, 1 January 2004 (2004-01-01), pages 6904-6911, XP002661308, ISSN: 0024-9297, DOI: DOI:10.1021/MA0490552 [retrieved on 2004-07-31]

## Beschreibung

Es werden thermoplastisch verarbeitbare Polymermischungen bestehend aus speziellen niedermolekularen Ligninfraktionen und einer thermoplastischen Matrix beschrieben. Die Polymermischungen verfügen bei hohen Ligningehalten (50%) in Bezug auf die elastische Matrix über eine gleiche oder höhere Festigkeit, Steifigkeit und Bruchdehnung. Zur Verbesserung der homogenen Mischbarkeit mit der Matrix können die niedermolekularen Ligninfraktionen zusätzlich chemisch modifiziert werden. Die Lignin-Derivate können vollständig oder teilweise substituiert sein. Die Substituenten gehören der Gruppe der aliphatischen, olefinischen und aromatischen Verbindungen an und können in Kombination angewendet werden. Es handelt sich um CH-Verbindungen, die Heteroatome wie beispielsweise Sauerstoff, Stickstoff, Schwefel oder Phosphor enthalten. Die Matrixpolymere gehören der Gruppe der linearen Heterokettenpolymere, die auch Seitengruppen- bzw. Seitenketten enthalten können, an. Die Seitengruppen bzw. Seitenketten sind ebenfalls durch aliphatische, olefinische und aromatische Strukturelemente gekennzeichnet, sowie Kombinationen aus ihnen. Sie enthalten polare Heteroatome und können mit den Substituenten der Lignin-Derivate übereinstimmen oder verschieden sein.

Die Verwendung von Lignin für die Herstellung thermoplastischer Materialien ist Gegenstand zahlreicher Publikationen, wobei zwei Faktoren eine wesentliche Rolle für den Herstellungsprozess selbst als auch für die Materialeigenschaften spielen. Zum großen Teil werden die Lignineigenschaften durch die Herkunft des Lignins (Pflanzenart, Standort), den Pulping-Prozess sowie die Isolierung aus der Schwarzlauge bestimmt. Dabei zeigt sich, dass Lignine, die dem Kraftprozess oder verschiedenen Organosolv-Verfahren entstammen, für die thermoplastische Verarbeitung gut geeignet sind. Das gilt sowohl für Thermoplaste mit Lignin als Füllstoff oder als Matrix (DE 19852067 A1).

Durch die Zugabe von Lignin zu typischen, linearkettigen Polymeren kommt es mit zunehmendem Ligningehalt zur deutlichen Verbesserung in der Materialsteifigkeit, wobei die Festigkeit ab einem bestimmten Ligningehalt jedoch meist wieder abnimmt. Lignin selbst kann nach erfolgreicher thermoplastischer Verarbeitung ebenfalls sehr hohe Steifigkeiten aufweisen, allerdings ist die Festigkeit solcher Materialien nur bedingt vorhanden. Um dies zu verbessern, kommt eine Verstärkung mit verschiedenen Fasern in Betracht, wobei in Kombination mit Lignin natürliche Fasern eine wesentliche Rolle spielen (DE 19852081 C1).

Zusätzlich bieten Weichmacher in Abhängigkeit ihrer chemischen Struktur, den physikalischen Eigenschaften und dem Grad des Zumischens die Möglichkeit, Ligninen Thermoplastizität zu verleihen. Die Verwendung größerer Mengen an Weichmacher bedeutet jedoch auch Abstriche in den mechanischen Kennwerten wie Festigkeit und Steifigkeit. Diese Weichmacher können molekularer Natur wie beispielsweise Wasser oder Glycerin aber auch Polymere (PEG) sein.

In der Literatur sind viele Beispiele für Lignin enthaltende thermoplastische Materialien zu finden. (siehe beispielsweise Nitz, Semke, Mühlhaupt in Macromol. Mater. Eng. 2001, 286, 737-743). Eine Klassifizierung kann sowohl nach der Art der verwendeten Lignine als auch nach den ausgewählten Matrixpolymeren vorgenommen werden. Bei den Matrixpolymeren kann man zwischen synthetischen und Biopolymeren differenzieren. Zur Gruppe der biobasierten Polymere gehören in diesem Zusammenhang vor allem PLA, Hydroxypropylcellulose, Hemicellulose, Celluloseester (Celluloseacetat, Celluloseacetatbutyrat, Cellulosepropionat), Proteine und auch Stärke. Bei der Herstellung der Materialmischungen ist neben dem thermoplastischen Verarbeiten auch das durch Lösungsmittel unterstützte Mischen der Polymere beschrieben. Vertreter der synthetischen Matrixpolymere sind beispielsweise: PVC, Polyvinylacetat, Vinylcopolymere, PE, PP, PU, Poly(ε-caprolacton), PEG, Poly[4-vinylpyridin], PMMA, Polyester, Polyvinylalkohol, Polyanilin und andere Polymere.

Für die Nutzung von Lignin als Bestandteil thermoplastischer Polymere wird neben der Verwendung als Füllstoff auch auf nützliche Eigenschaften im Hinblick auf Prozesshilfen eingegangen. So lässt sich das Fließverhalten verschiedener Polyester wie PC, PET, PBT und PPT durch den Einsatz kleiner Mengen an verschiedenen Ligninen (0,1 - 5%) verbessern. Die Präsenz von Lignin in PE- und PP-basierten Polymerfilmen sorgt für eine Verbesserung des Abbauverhaltens, wobei Ligninpulver mit definierten Partikelgrößen (1 - 5 µm) als besonders effektiv gelten.

Neben der Verwendung von nicht modifizierten Ligninen als Materialkomponenten sind auch Lignin-Derivate Gegenstand intensiver Forschungen, um durch diesen Schritt atypische Eigenschaften wie beispielsweise die Löslichkeit in apolaren Medien, die Variation der Glasübergangstemperaturen, die Reaktivität gegenüber diversen Reagenzien oder die Verträglichkeit mit unterschiedlichen Polymeren als Blendkomponente beeinflussen oder sogar steuern zu können. Im Hinblick auf Polymermischungen ist hinsichtlich der Lignin-Derivate (A) und den Matrixkomponenten (B) zu differenzieren:

### (A)

Generell finden für die chemische Modifizierung Reaktionen wie Acylierung, Alkylierung, Urethanbildung, Halogenierung, Nitrierung, Sulfonierung, Oxidation, Reduktion oder die einfache Hydrolyse Anwendung, wobei aus Sicht thermoplastischer Anwendungen der Fokus auf den ersten drei genannten Methoden liegt.

Die einfachste Variante der Derivatisierung ist die vollständige Umsetzung von Lignin mit einem monovalenten Reagens, so dass einheitliche Substituentenmuster in diesen Polymeren dominieren. Dafür sind in der wissenschaftlichen und Patentliteratur eine Vielzahl an Beispielen publiziert worden, die sich im Wesentlichen auf Ester und Ether konzentrieren, wobei der Schwerpunkt bei den Estern zu sehen ist.

Die ersten Untersuchungen zur Veresterung von Lignin beschäftigten sich mit aliphatischen Monocarbonsäuren unterschiedlicher Alkylkettenlängen, um insbesondere den Einfluss auf das thermoplastische Verhalten studieren zu können. Dabei wurden Monocarbonsäuren mit bis zu 18 C-Atomen in den Alkylketten verwendet. Die Verringerung der Glasübergangstemperatur mit zunehmender Alkylkettenlänge in diesen Ligninestern ließ sich so nachweisen, was auch durch andere Arbeiten bestätigt wurde. In letzter Zeit liegt der Schwerpunkt im Rahmen solcher Studien eher auf Carbonsäuren mit 2 -12 C-Atomen.

Eine Erweiterung des Spektrums von Lignin-Derivaten kann durch das Ausstatten solcher natürlich nachwachsenden Polymere mit Reaktivgruppen vorgenommen werden, die Folgereaktionen erlauben. Dabei ist zwischen lignintypischen Funktionen wie OH-Gruppen in Form von Hydroxyalkylethern oder ligninatypischen Reaktivgruppen wie beispielsweise Epoxide, Acrylate oder Methacrylate usw. zu unterscheiden. Solche Verbindungen dienen dann als Intermediate oder Prepolymere für die Herstellung anderer Polymere, beispielsweise Polyurethane.

Zusätzlich zu diesen Gruppen sind Lignin-Derivate beschrieben, die mit mehreren monovalenten Reagenzien synthetisiert werden und als Polymere mit nicht einheitlichen Substituentenmustern zu beschreiben sind. Glasser et al. berichteten über Lignin-Derivate mit aliphatischen Polyalkyletherketten als Zweitsubstituent. Hierbei können zuerst monovalente Reagenzien zum Blockieren von OH-Gruppen des Lignins verwendet werden wie beispielsweise Alkylierungsmittel aus der Gruppe der Alkylhalogenide oder Dialkylsulfate. Dadurch lässt sich eine zuvor festgelegte Anzahl an OH-Gruppen deaktivieren. Die verbleibenden OH-Funktionen lassen sich dann mit geeigneten Reagenzien im Sinne von Kettenverlängerungsreaktionen nutzen, um Oligomer- bzw.

Polymerketten an die Lignine zu binden. Glasser et al. gehen in diesem Zusammenhang von einer sternförmigen Polymerarchitektur aus. Solche Lignin-Derivate können nach Ansicht der Autoren, je nach der Struktur der kettenförmigen Segmente, auch der Gruppe der thermoplastischen Elastomere zugeordnet werden. Bei den an Lignin gebundenen Oligomer- bzw. Polymerketten handelt es sich um aliphatische Polyether oder Polyester, die jeweils durch Ringöffnungsreaktionen aus cyclischen Monomeren aufgebaut werden. Wegen der verbleibenden terminalen OH-Gruppen eigenen sich solche speziellen Lignin-Derivate als Makromonomere für die Zubereitung von Harzrezepturen oder direkt zur Synthese von Polymeren wie beispielsweise Polyurethane, wobei dafür eine zweite Monomerkomponente benötigt wird.

### (B)

Lignin-Derivate als Komponente oder Matrix von thermoplastisch verarbeitbaren Polymermischungen sind in der Literatur vergleichsweise wenig beschrieben. Hydroxypropyl-Lignine (HPL) werden in Kombination mit PMMA, Polyvinylalkohol, Cellulosetriacetat, Pfropf-Copolymeren oder Styren beschrieben. Daher erlauben reaktive OCN-Endgruppen spezieller Styrene Reaktionen mit HPL, wobei Polymere sternförmiger Architektur entstehen. Dieses Strukturmerkmal gilt auch für Lignin in Verbindung mit Caprolacton. Aliphatische Ligninester wie das Acetat, Butyrat, Hexanoat und Laurat wurden in Kombination mit Celluloseacetatbutyrat und PHB mit Ligninbutyrat untersucht. Wesentliche Aspekte bei den Studien sind die Erforschung der Kompatibilität zwischen diesen Polymeren sowie die Auswirkungen auf das Erweichungsverhalten der Blends bzw. ihre Verarbeitbarkeit.

Die Verwendung von Lignin als Füllstoff für thermoplastische Komposite bewirkt in den meisten Fällen eine Erhöhung der Steifigkeit und bedingt auch eine Erhöhung der Materialfestigkeit. Eine wesentliche Konsequenz ist jedoch, insbesondere bei Polymeren mit vergleichsweise hoher Bruchdehnung, der Verlust an Elastizität, was beispielsweise durch eine drastische Verringerung der ε-Werte angezeigt wird. Eine Möglichkeit, diesem Effekt zu begegnen, ist die Verwendung von Weichmachern, was aber wiederum negative Konsequenzen für die Festigkeit und Steifigkeit der Komposite nach sich zieht.

Ausgehend hiervon ist es somit die Aufgabe der vorliegenden Erfindung, thermoplastische Kompositmaterialien bzw. Polymercompounds anzugeben, die Lignin-gefüllt sind, jedoch trotzdem eine hohe Elastizität aufweisen. Zudem ist es Aufgabe der vorliegenden Erfindung, entsprechende Polymercompounds herzustellen bzw. Formkörper und Verwendungszwecke hieraus anzugeben.

Diese Aufgabe wird hinsichtlich eines thermoplastischen Polymercompounds mit den Merkmalen des Patenanspruchs 1, bezüglich eines Herstellungsverfahrens mit den Merkmalen des Patenanspruchs 17, bezüglich eines Formkörpers mit den Merkmalen des Patentanspruchs 21 sowie hinsichtlich Verwendungszwecken eines erfindungsgemäßen Polymercompounds bzw. eines Formkörpers mit den Merkmalen des Patentanspruchs 22 gelöst. Die jeweiligen abhängigen Patentansprüche stellen dabei vorteilhafte Weiterbildungen dar.

Die Erfindung betrifft somit einen thermoplastischen Polymercompound wie im Anspruch 1 beschrieben.

Die oben angesprochene Problematik wird somit erfindungsgemäß dadurch gelöst, dass eine niedermolekulare Ligninfraktion eines Lignins und/oder eines Lignin-Derivats, die in der Polymatrix teilweise oder vollständig löslich ist, in das Matrixpolymer eingearbeitet wird. Die niedermolekularen Ligninfraktionen können auch chemisch zu Lignin-Derivaten modifiziert werden, um die homogene Mischbarkeit mit dem Matrixpolymer zu unterstützen. Dadurch bleibt die Matrix elastisch, wobei auch Festigkeit und Modul gegenüber dem reinen Matrixpolymer erhalten bleiben und gesteigert werden können.

Für die Gewinnung der niedermolekularen Ligninfraktion sind Kraft-Lignine und schwefelfreie Lignine aus den verschiedenen Organosolv-Verfahren geeignet. Lignine aus Einjahrespflanzen, die beispielsweise bei der Gewinnung von Bioethanol anfallen, sind durch eine vergleichsweise geringe Löslichkeit in verschiedenen Lösungsmitteln gekennzeichnet. Das liegt in erster Linie an einem hohen Molekulargewicht sowie einem komplexeren Verzweigungs- bzw. Vernetzungsmuster der Ligninbausteine. Durch eine Nachbehandlung mit entsprechenden Aufschlussverfahren (Kraft, Organosolv, enzymatisch etc.) ist ein teilweiser Ligninabbau möglich, der zu Ligninsubstraten mit kleineren Molekulargewichten und deshalb zu verbesserter Löslichkeit führt. Diese Lignine können dann als Substrate für die Gewinnung niedermolekularer Ligninfraktionen verwendet werden. Lignine, die den verschiedenen Aufschlussverfahren entstammen, weisen aufgrund der konkreten Aufschlussbedingungen letztendlich mittlere Molekulargewichte auf, die sich in bestimmten Grenzen bewegen; für Kraft-Lignine kann ein Mw-Bereich von ca. 4000 - 6000 g/mol angenommen werden. Gegenüber anderen biobasierten Polymeren und insbesondere gegenüber linearkettigen, synthetischen Polymeren sind Lignine generell durch eine breite Molmassenverteilung (hohe Polydispersität) gekennzeichnet. Das bedeutet, dass in Bezug auf das mittlere Molekulargewicht auch wesentlich kleinere Ligninmoleküle vorhanden sind. Diese zeichnen sich durch gute Löslichkeiten in verschiedenen Lösungsmitteln aus und letztendlich auch durch geringe Glasübergangstemperaturen.

Die Isolierung niedermolekularer Fraktion aus einem Ligninsubstrat kann prinzipiell durch die verschiedensten organischen Lösungsmittel wie beispielsweise Ketone (Aceton, MEK, etc.), Alkohole (Methanol, Ethanol etc.), Ester (Ethylacetat, Methylpropionat etc.), Halogenkohlenwasserstoffe (Chloroform, Methylenchlorid, etc.), Säuren (Essigsäure, Propionsäure etc.), Ether (Diethylether, THF, etc.) etc. und Mischungen aus den verschiedenen organischen Lösungsmitteln erfolgen. Eine zweite Gruppe umfasst wässrige Lösungsmittelsysteme. Das bedeutet Wasser selbst sowie Mischung von Wasser mit wasserlöslichen organischen Lösungsmitteln. Bei wässrigen Systemen ist auch der pH-Wert vergleichsweise leicht zu variieren, wobei pH-Werte zwischen 7 - 14 die Löslichkeit der Lignine in der flüssigen Phase wesentlich verbessern. Der Übergang zu niedermolekularen Ligninfraktionen zieht im Wesentlichen eine Erhöhung der Hydroxylgruppenzahl sowie eine Verringerung der Glasübergangstemperatur nach sich. Durch geringere Tg-Werte ist eine leichtere thermoplastische Verarbeitung der Lignine möglich. Mehr freie OH-Gruppen bewirken eine Steigerung der Ligninpolarität aber auch ihrer chemischen Reaktivität. Dadurch ist eine bessere Wechselwirkung insbesondere mit polaren Polymeren zu erwarten.

Unter Lignin-Derivaten werden chemisch modifizierte Lignine verstanden, bei denen insbesondere die Hydroxy-Funktionalitäten des Lignins in einer chemischen Reaktion modifiziert wurden. Entsprechende Lignin-Derivate, die erfindungsgemäß für das thermoplastische Polymercompound verwendet werden, weisen ebenso ein oben angegebenes Molekulargewicht auf.

Bevorzugte gewichtsgemittelte Molekulargewichte des niedermolekularen Lignins bzw. des niedermolekularen Lignin-Derivats betragen dabei von 200 bis 5.000 g/mol, bevorzugt von 200 bis 4.000 g/mol, besonders bevorzugt von 200 bis 3,000 g/mol.

Das niedermolekulare Lignin bzw. Lignin-Derivat liegt in dem thermoplastischen Matrixpolymer vollständig gelöst vor, d.h. es sind keine Partikel des Lignins bzw. des niedermolekularen Lignins mehr nachweisbar. Somit ist eine vollständige Homogenisierung des Polymercompounds gewährleistet.

Für den Fall, dass das Lignin bzw. Derivat hiervon teilweise gelöst in der thermoplastischen Matrix vorliegt, liegt der nicht gelöste Teil des niedermolekularen Lignins und/oder des niedermolekularen Lignin-Derivats partikulär vor, wobei die mittleren Teilchengrößen dieser Partikel ≤ 100 nm, bevorzugt 20 nm, weiter bevorzugt ≤ 20 nm, besonders bevorzugt ≤ 10 nm betragen. Die durchschnittlichen Partikelgrößen können mittels literaturbekannter Messverfahren bestimmt werden. Insbesondere kommen DSC- oder DMA-Verfahren (Kaplan, D.S. Structure-property relationships in copolymers to composites: Molecular interpretations of the glass transition phenomemon. J. Appl. Polym. Sci. 1976, 20 (10), 2615-2629; Utracki, L.A. Polymer Alloys and Blends; Hanser Gardner Publications: Munich, 1990; [3] Nishio, Y. Hyperfine composites of cellulose with synthetic polymers. In Cellulose Polymers, Blends, and Composites; Gilbert, R.D., Ed.; Hanser: Munich, New York, 1994; 95-113) oder Festkörper NMR-Spektroskopie (Masson, J.F.; Manley, R.S. Cellulose poly(4-vinylpyridine) blends. Macromolecules 1991, 24 (22), 5914-5921; Grobelny, J.; Rice, D.M.; Karasz, F.E.; MacKnight, W.J.High-resolution solid-state C-13 nuclear magnetic resonance study of polybenzimidazole/polyimide blends, Macromolecules 1990, 23 (8), 2139-2144; Zhang, X.Q.; Takegoshi, K.; Hikichi, K. High-resolution solid-state C-13 nuclear magnetic resonance study on poly(vinyl alcohol)/poly(vinylpyrrolidone) blends, Polymer 1992, 33 (4), 712-717) als spezifische Verfahren zur Bestimmung der mittleren Teilchengrößen in Frage.

Gemäß einer weiter bevorzugten Ausführungsform kann auch ein weiteres Lignin bzw. Lignin-Derivat mit einem gewichtsgemittelten Molekulargewicht von > 6.000 g/mol, bevorzugt 6.100 g/mol bis 20.000 g/mol enthalten sein.

Als Ligninquelle, sowohl für die niedermolekulare Ligninfraktion als auch für das weitere, höhermolekulare Lignin dienen sowohl Hardwood- als auch Softwood-Lignine, z.B. aus Laub. oder Nadelholz-Quellen, welche beispielsweise dem Kraft-Prozess entstammen oder schwefelfreie Lignine aus entsprechenden Organosolv-Verfahren. Lignine aus Einjahrespflanzen, welche zum Beispiel nach der Bioethanolgewinnung als Reststoffe anfallen, können nach Anwendung eines Lignin abbauenden Prozesses (Kraft, Organosolv, enzymatisch) als Substrat genutzt werden.

Die niedermolekulare Lignin-Fraktion kann aus entsprechenden Lignin-Quellen mittels extraktiver Verfahren gewonnen werden. Für die Extraktion kommen wässrige und organische Lösungsmittel, wie beispielsweise Aceton, MEK, Dioxan, Methanol, Ethanol, Chloroform etc. sowie Mischungen aus Wasser und wasserlöslichen organischen Lösungsmitteln in Betracht. Bei der Verwendung wässriger Lösungsmittel kann der pH-Wert zwischen 2 und 14, bevorzugt zwischen 6 und 14 und sehr bevorzugt zwischen 7 und 13 liegen. Die Extraktion erfolgt bevorzugt in einem Temperaturbereich zwischen 0 bis 150°C, bevorzugt zwischen 10 und 100°C, sehr bevorzugt zwischen 20 und 60°C.

Beim zuvor beschriebenen Extraktionsprozess gehen die niedermolekularen Lignine in Lösung. Somit können aus einem Ligninsubstrat umfassend niedermolekulare sowie höhermolekulare Lignine separat abgetrennt werden.

Die chemische Modifizierung von Ligninen zu Lignin-Derivaten - falls diese beinhaltet sein sollen - erfolgt bevorzugt nach Abtrennung der niedermolekularen Lignin-Fraktion.

Für den Fall, dass sowohl nieder- als auch höhermolekulare Lignine bzw. Derivate hiervon im thermoplastischen Polymercompound enthalten sind, ist es vorteilhaft, wenn das Gewichtsverhältnis der Gesamtheit des mindestens einen niedermolekularen Lignins und/oder niedermolekularen Lignin-Derivats mit zur Gesamtheit des mindestens einen weiteren Lignins und/oder Lignin-Derivats von 1:99 bis 99:1, bevorzugt von 20:80 bis 80:20, besonders bevorzugt von 30:70 bis 70:30 beträgt.

Ein bevorzugter Gesamtligningehalt, d.h. die Summe aus niedermolekularen Ligninen bzw. Derivaten hiervon und ggf. vorhandenen weiteren Ligninen, i.e. höhermolekularen Ligninen bzw. Derivaten hiervon, beträgt, bezogen auf das Polymercompound, von 0,1 bis 80 Gew.-%, bevorzugt von 1 bis 70 Gew.%, weiter bevorzugt von 5 bis 60 Gew.-%, besonders bevorzugt von 10 bis 50 Gew.-%.

Vorteilhaft ist ferner, wenn die Glasübergangstemperatur des mindestens einen niedermolekularen Lignins und/oder niedermolekularen Lignin-Derivats kleiner ist als die Glasübergangstemperatur oder der Schmelzpunkt des mindestens einen thermoplastischen Matrixpolymers und/oder die Glasübergangstemperatur des mindestens einen weiteren Lignins und/oder Lignin-Derivats. Beispielhafte Glasübergangstemperaturen niedermolekularer Lignine bzw. Derivate hiervon liegen dabei in einem Bereich von < 150°C, bevorzugt < 120°C, insbesondere < 100°C.

Zudem kann es gegeben sein, dass das mindestens eine niedermolekulare Lignin-Derivat durch partielle oder vollständige Derivatisierung, ausgewählt aus der Gruppe der Veresterungen, Veretherungen, Urethanbildungen oder Kombinationen der zuvor genannten Derivatisierungen, an den Hydroxylgruppen eines entsprechenden Lignins erhalten wurde.

Mit der Derivatisierung kann insbesondere eine Verbesserung der homogenen Vermischbarkeit zwischen niedermolekularem Lignin und der Matrix erreicht werden. Dabei kann der Substitutionsgrad zwischen 0 und 100%, bezogen auf die Hydroxylzahl, variiert werden. Neben Änderungen in der Polarität lässt sich auch eine Verringerung in der Glasübergangstemperatur erreichen, was für die thermoplastische Verarbeitbarkeit von Bedeutung ist. Lignine können im einfachsten Fall durch Umsetzungen mit Säureanhydriden oder Säurehalogeniden verestert werden. Die Veretherung gelingt beispielsweise durch Reaktionen mit Reagenzien auf der Basis von Halogeniden, Epoxiden und Glycidylverbindungen. Urethane bilden sich durch die Addition von Isocyanaten an die OH-Gruppen der Lignine.

Bevorzugte Derivatisierungsgrade von Lignin-Derivaten betragen zwischen 0,1 und 100%, bevorzugt von 0,5 bis 100%, bezogen auf die Anzahl der OH-Gruppen.

Weiter vorteilhaft sind Substituenten der Derivate ausgewählt aus der Gruppe der aliphatischen, olefinischen und/oder aromatischen Verbindungen, die Heteroatome, insbesondere Sauerstoff, Stickstoff, Schwefel und/oder Phosphor enthalten können.

Die zuvor gemachten Annahmen und Ausführungen hinsichtlich der chemischen Art sowie der Quantität der Derivatisierung der niedermolekularen Lignine gelten uneingeschränkt auch für die weiteren, höhermolekularen Lignin-Derivate.

Bevorzugte thermoplastische Matrixpolymere sind dabei ausgewählt aus der Gruppe bestehend aus Polyamiden, insbesondere AB Polyamide (6, 11, 12) und AABB Polyamide bestehend aus Dicarbonsäuren mit 4, 6, 8, 9, 10, 12, 14, 16, 18 C-Atomen und Diaminen mit 4, 6, 8, 9, 10, 12, 14, 16, 18 C-Atomen; Polyestern, insbesondere PET oder PLA; Polyethern; Cellulose oder Cellulosederivaten; PVC, PVA, Vinylcopolymeren, Polyolefinen, insbesondere PE oder PP; Polyurethanen; Polycarbonaten; Polyalkylenglycolen, insbesondere PEG; Polyvinylpyridin; Poly(meth)acrylaten, insbesondere PMMA; Polyvinylalkoholen; Polyanilinen sowie Kombinationen oder Blends aus den zuvor genannten Polymeren.

Zudem ist es vorteilhaft, wenn zusätzlich mindestens ein Haftvermittler enthalten ist, bevorzugt in einer Menge von 0,01 bis 10 Gew.-%, weiter bevorzugt von 0,1 bis 5 Gew.-%, weiter bevorzugt von 0,5 bis 3 Gew.-%, insbesondere von 1 bis 2 Gew.-%.

Der mindestens eine Haftvermittler ist dabei vorteilhafterweise ausgewählt aus der Gruppe bestehend aus Diisocyanaten; Maleinsäureanhydrid gepfropften Polymeren oder Copolymeren, insbesondere Maleinsäureanhydrid gepfropftes Polyethylen, Polypropylen, Polystyrol, Polyisobuten, Polyethylen-covinylacetat oder Polyethylen-co-octan sowie Mischungen oder Kombinationen hieraus, wobei bevorzugt der Pfropfungsgrad der Maleinsäureanhydrid gepfropften Polymeren oder Copolymeren von 0,0001 bis 90 %, weiter bevorzugt von 0,1 bis 10 %, besonders bevorzugt von 3 bis 8 % beträgt.

Der Haftvermittler kann dabei kovalent, insbesondere über mindestens eine Ester-, Ether-, Amid-, Amin-, Urethan- oder Siloxanbindung und/oder durch nebenvalente Bindungen, insbesondere Wasserstoffbrückenbindungen an das mindestens eine niedermolekulare Lignin und/oder niedermolekulare Lignin-Derivat und/oder das mindestens eine weitere Lignin und/oder Lignin-Derivat gebunden sein.

Vorzugsweise beträgt das zahlengemittelte Molekulargewicht des Haftvermittlers von 100 bis 500.000 g/mol, bevorzugt von 500 und 50.000 g/mol, besonders bevorzugt von 1.000 und 10.000 g/mol.

Zudem kann der Polymercompound mindestens ein oder mehrere weitere Additive enthalten, die bevorzugt ausgewählt sind aus der Gruppe bestehend aus olfaktorischen Substanzen, Substanzen zur Minimierung olfaktorischer Emissionen, Pigmente, Farbstoffen, UV- und/oder Lichtstabilisatoren, Flammschutzmitteln, Konservierungsstoffen, Antioxidantien, Naturfasern und/oder künstliche Fasern.

Die Erfindung betrifft weiter ein Verfahren zur Herstellung eines Polymercompounds wie zuvor beschrieben, bei dem ein thermoplastisches Matrixpolymer oder ein Blend enthaltend oder bestehend aus mindestens zwei thermoplastischen Matrixpolymeren aufgeschmolzen und der Schmelze mindestens ein niedermolekulares Lignin und/oder niedermolekulares Lignin-Derivat mit einem gewichtsgemittelten Molekulargewicht von 200 bis 6.000 g/mol, bevorzugt von 200 bis 5.000 g/mol, weiter bevorzugt von 200 bis 4.000 g/mol, besonders bevorzugt von 200 bis 3.000 g/mol homogen zugemischt wird.

Weiter vorteilhaft kann ein weiteres Lignin bzw. Lignin-Derivat der thermoplastischen Matrix zugesetzt werden.

Die erfindungsgemäße Verfahrensführung lässt sich insbesondere auf drei bevorzugte Alternativen bewerkstelligen, in dem
a) entweder zunächst eine vollständige Zugabe des mindestens einen niedermolekularen Lignins und/oder des niedermolekularen Lignin-Derivats erfolgt und anschließend eine vollständige Zugabe des mindestens einen weiteren Lignins und/oder Lignin-Derivats, oder
b) zunächst eine vollständige Zugabe des mindestens einen weiteren Lignins und/oder Lignin-Derivats erfolgt und anschließend eine vollständige Zugabe des mindestens einen niedermolekularen Lignins und/oder des niedermolekularen Lignin-Derivats, oder
c) eine abwechselnde Zugabe von Portionen des mindestens einen niedermolekularen Lignins und/oder des niedermolekularen Lignin-Derivats sowie des mindestens einen weiteren Lignins und/oder Lignin-Derivats
zur Polymerschmelze der thermoplastischen Matrix erfolgt.

Bevorzugte Verarbeitungstemperaturen liegen dabei maximal 50 °C, bevorzugt maximal 30 °C, besonders bevorzugt maximal 10 °C über der Schmelztemperatur des thermoplastischen Matrixpolymers oder des Blends mindestens zweier thermoplastischer Matrixpolymeren.

Insbesondere betragen Verarbeitungstemperaturen maximal 250°C, bevorzugt maximal 230°C, besonders bevorzugt maximal 210°C.

Zudem betrifft die vorliegende Erfindung Formkörper, hergestellt aus einem erfindungsgemäßen Polymercompound. Bevorzugte Gestaltungen eines Formkörpers sind dabei insbesondere Körper in Form einer Folie oder einer Faser.

Die erfindungsgemäßen Polymercompounds bzw. Formkörper eignen sich insbesondere als Konstruktionswerkstoffe.

Die vorliegende Erfindung wird anhand der nachfolgenden Ausführungen näher erläutert, ohne die Erfindung auf die speziell dargestellten Parameter zu beschränken.

### Beispiel 1

X g PA 11 wurden in einem Kneter bei einer Temperatur von 200°C aufgeschmolzen und danach portionsweise Y g des niedermolekularen Ligninextraktes zugegeben (X, Y s. Tabelle 1). Der Knetprozess dauerte 5 Minuten, bei einer Umdrehungsgeschwindigkeit von 50 min⁻¹ und unter Inertgasatmosphäre. Im Anschluss erfolgten die Entnahme des Knetgutes und deren Verformung zu Prüfkörpern mittels Spritzguss. Die Tabellen 2 und 3 enthalten ausgewählte Ergebnisse der Zug-Dehnungs-Experimente (DIN EN ISO 527).

**Tabelle 1: Zusammensetzung der Polymermischungen**

| | PA11 [g] | Lignin [g] |
|---|---|---|
| 10% | 234 | 26 |
| 20% | 208 | 52 |
| 30% | 182 | 78 |
| 40% | 156 | 104 |
| 50% | 130 | 130 |

**Tabelle 2: Ausgewählte Resultate der mechanischen Charakterisierung (DIN EN ISO 527) von PA11/Lignin-Gemischen verschiedener Ligningehalte**

| | Referenz | 10% | 20% | 30% | 40% | 50% |
|---|---|---|---|---|---|---|
| σ [MPa] | 44±6 | 45±1 | 56±1 | 54±4 | 61±3 | 52±3 |
| E [MPa] | 1120±80 | 1660±40 | 2020±40 | 2320±30 | 2580±40 | 2720±70 |
| ε [%] | 135±40 | 88±10 | 52±8 | 2,9±0,5 | 2,9±0,3 | 2,2±0,2 |

**Tabelle 3: Ausgewählte Resultate der mechanischen Charakterisierung (DIN EN ISO 527) von Gemischen aus PA11 und dem niedermolekularen Ligninextrakt**

| | Referenz | 10% | 20% | 40% |
|---|---|---|---|---|
| σ [MPa] | 44±6 | 50±1 | 53±2 | 56±1 |
| E [MPa] | 1120±80 | 1660±10 | 1760±60 | 2180±30 |
| ε [%] | 135±40 | 149±8 | 194±20 | 182±10 |

Überraschenderweise hat sich gezeigt, dass bei der Verwendung von PA11 als Matrix und einer niedermolekularen Fraktion eines Softwood-Lignins bis zu einem Ligningehalt von 50% der größte Teil dieses Lignins mit PA11 eine homogene Phase bildet. Dadurch war es möglich, die Elastizität von PA11, die mit einer Bruchdehnung (ε) von 135% angegeben werden kann, teilweise zu erhöhen (40% Ligninextrakt, ε = 182%). Auch Zugfestigkeit und Steifigkeit konnten im Vergleich zu reinem PA11 (43,5 MPa und 1120 MPa) auf 56,2 MPa bzw. 2180 MPa verbessert werden. Setzt man im Gegensatz dazu das Ligninsubstrat (40%), aus dem der niedermolekulare Extrakt gewonnen worden ist, ein, so ließ sich eine Zugfestigkeit mit 60,9 MPa und ein Modul mit 2580 MPa feststellen, die Bruchdehnung lag jedoch bei lediglich 2,9%.

Überraschenderweise zeigte sich auch, dass durch die Zugabe von bis zu 60%, bevorzugt 50% und besonders bevorzugt 40% des Ligninsubstrates zur homogenen Polymermischung bestehend aus der niedermolekularen Ligninfraktion und der Matrix die Bruchdehnung auf einem höheren Wert gehalten werden konnte als bei der Verwendung der Matrixpolymere ohne niedermolekulare Ligninfraktion und deren Derivaten. Durch die Kombination von niedermolekularer Ligninfraktion und Ligninsubstrat lassen sich so elastische Komposite mit einem höheren Gesamtgehalt an Lignin herstellen als bei Verwendung des reinen Ligninsubstrates.

## Patentansprüche

1. Thermoplastischer Polymercompound, umfassend ein thermoplastisches Matrixpolymer oder einen Blend aus mindestens zwei thermoplastischen Matrixpolymeren sowie mindestens ein niedermolekulares Lignin und/oder niedermolekulares Ligninderivat mit einem gewichtsgemittelten Molekulargewicht von 200 bis 6,000 g/mol,
durch gekennzeichnet, dass das niedermolekulare Lignin und/oder das niedermolekulare Ligninderivat in dem mindestens einen thermoplastischen Matrixpolymer
a) vollständig gelöst vorliegt, oder
b) teilweise gelöst vorliegt, wobei der nicht gelöste Teil des niedermolekularen Lignins und/oder des niedermolekularen Ligninderivats partikulär vorliegt und die mittleren Teilchengrößen dieser Partikel ≤ 100 nm, bevorzugt 20 nm, weiter bevorzugt ≤ 20 nm, besonders bevorzugt ≤ 10 nm betragen.

2. Polymercompound nach Anspruch 1, **dadurch gekennzeichnet, dass** das niedermolekulare Lignin und/oder das niedermolekulare Ligninderivat ein gewichtsgemitteltes Molekulargewicht von 200 bis 5.000 g/mol, bevorzugt von 200 bis 4.000 g/mol, besonders bevorzugt von 200 bis 3.000 g/mol aufweist.

3. Polymercompound nach einem der vorhergehenden Ansprüche, **dadurch gekennzeichnet, dass** mindestens ein weiteres Lignin und/oder Ligninderivat mit einem gewichtsgemittelten Molekulargewicht von > 6.000 g/mol, bevorzugt 6.100 g/mol bis 20.000 g/mol enthalten ist, wobei vorzugsweise das Gewichtsverhältnis der Gesamtheit des mindestens einen niedermolekularen Lignins und/oder niedermolekularen Ligninderivats mit zur Gesamtheit des mindestens einen weiteren Lignins und/oder Ligninderivats von 1:99 bis 99:1, bevorzugt von 20:80 bis 80:20, besonders bevorzugt von 30:70 bis 70:30 beträgt,

4. Polymercompound nach einem der vorhergehenden Ansprüche, **dadurch gekennzeichnet, dass** der Gesamtligningehalt, bezogen auf das Polymercompound von 0,1 bis 80 Gew.-%, bevorzugt von 1 bis 70 Gew.%, weiter bevorzugt von 5 bis 60 Gew.-%, besonders bevorzugt von 10 bis 50 Gew.-% beträgt, und/oder
die Glasübergangstemperatur des mindestens einen niedermolekularen Lignins und/oder niedermolekularen Ligninderivats kleiner ist als die Glasübergangstemperatur oder der Schmelzpunkt des mindestens einen thermoplastischen Matrixpolymers und/oder die Glasübergangstemperatur des mindestens einen weiteren Lignins und/oder Ligninderivats.

5. Polymercompound nach einem der vorhergehenden Ansprüche, **dadurch gekennzeichnet, dass** das mindestens eine niedermolekulare Ligninderivat durch partielle oder vollständige Derivatisierung ausgewählt aus der Gruppe der Veresterungen, Veretherungen, Urethanbildungen oder Kombinationen der zuvor genannten Derivatisierungen an den Hydroxylgruppen eines entsprechenden Lignins erhalten wurde, wobei vorzugsweise
der Derivatisierungsgrad, bezogen auf die Anzahl der OH-Gruppen, zwischen 0,1 und 100 %, bevorzugt von 0,5 bis 100 % beträgt, und/oder
Substituenten der Derivate ausgewählt sind aus der Gruppe der aliphatischen, olefinischen und/oder aromatischen Verbindungen, die Heteroatome, insbesondere Sauerstoff, Stickstoff, Schwefel und/oder Phosphor enthalten können.

6. Polymercompound nach einem der vorhergehenden Ansprüche, **dadurch gekennzeichnet, dass** das thermoplastische Matrixpolymer ausgewählt ist aus der Gruppe bestehend aus Polyamiden, insbesondere AB Polyamide (6, 11, 12) und AABB Polyamide bestehend aus Dicarbonsäuren mit 4, 6, 8, 9, 10, 12, 14, 16, 18 C-Atomen und Diaminen mit 4, 6, 8, 9, 10, 12, 14, 16, 18 C-Atomen; Polyestern, insbesondere PET oder PLA; Polyethern; Cellulose oder Cellulosederivaten; PVC, PVA, Vinylcopolymeren, Polyolefinen, insbesondere PE oder PP; Polyurethanen; Polycarbonaten; Polyalkylenglycolen, insbesondere PEG; Polyvinylpyridin; Poly(meth)acrylaten, insbesondere PMMA; Polyvinylalkoholen; Polyanilinen sowie Kombinationen oder Blends aus den zuvor genannten Polymeren.

7. Polymercompound nach einem der vorhergehenden Ansprüche, **dadurch gekennzeichnet, dass** mindestens ein Haftvermittler enthalten ist, bevorzugt in einer Menge von 0,01 bis 10 Gew.-%, weiter bevorzugt von 0,1 bis 5 Gew.-%, weiter bevorzugt von 0,5 bis 3 Gew.-%, insbesondere von 1 bis 2 Gew.-%, wobei vorzugsweise
der mindestens eine Haftvermittler ausgewählt ist aus der Gruppe bestehend aus Diisocyanaten; Maleinsäureanhydrid gepfropften Polymeren oder Copolymeren, insbesondere Maleinsäureanhydrid gepfropftes Polyethylen, Polypropylen, Polystyrol, Polyisobuten, Polyethylen-co-vinylacetat oder Polyethylen-co-octan sowie Mischungen oder Kombinationen hieraus, wobei bevorzugt der Pfropfungsgrad der Maleinsäureanhydrid gepfropften Polymeren oder Copolymeren von 0,0001 bis 90 %, weiter bevorzugt von 0,1 bis 10 %, besonders bevorzugt von 3 bis 8 % beträgt, und/oder
der Haftvermittler kovalent, insbesondere über mindestens eine Ester-, Ether-, Amid-, Amin-, Urethan- oder Siloxanbindung und/oder durch nebenvalente Bindungen, insbesondere Wasserstoffbrückenbindungen an das mindestens eine niedermolekulare Lignin und/oder niedermolekulare Ligninderivat und/oder das mindestens eine weitere Lignin und/oder Ligninderivat gebunden ist, und/oder
das zahlengemittelte Molekulargewicht des Haftvermittlers von 100 bis 500.000 g/mol, bevorzugt von 500 und 50.000 g/mol, besonders bevorzugt von 1.000 und 10.000 g/mol beträgt.

8. Polymercompound nach einem der vorhergehenden Ansprüche, **dadurch gekennzeichnet, dass** das niedermolekulare Lignin, das dem niedermolekularen Ligninderivat zugrunde liegende Lignin, das weitere Lignin und/oder das dem weiteren Ligninderivat zugrunde liegende Lignin aus Nadeholz- oder Laubholzquellen sowie Einjahrespflanzen stammt und/oder durch den Kraft-Prozess, Organosolv-Verfahren, enzymatische Verfahren oder durch extraktive Verfahren erhalten wurde.

9. Polymercompound nach einem der vorhergehenden Ansprüche, **dadurch gekennzeichnet, dass** Additive enthalten sind, bevorzugt ausgewählt aus der Gruppe bestehend aus olfaktorischen Substanzen, Substanzen zur Minimierung olfaktorischer Emissionen, Pigmente, Farbstoffen, UV- und/oder Lichtstabilisatoren, Flammschutzmitteln, Konservierungsstoffen, Antioxidantien, Naturfasern und/oder künstliche Fasern.

10. Verfahren zur Herstellung eines Polymercompounds nach einem der vorhergehenden Ansprüche bei dem ein thermoplastisches Matrixpolymer oder ein Blend enthaltend oder bestehend aus mindestens zwei thermoplastischen Matrixpolymeren aufgeschmolzen und der Schmelze mindestens ein niedermolekulares Lignin und/oder niedermolekulares Ligninderivat mit einem gewichtsgemittelten Molekulargewicht von 200 bis 6.000 g/mol, bevorzugt von 200 bis 5.000 g/mol, weiter bevorzugt von 200 bis 4.000 g/mol, besonders bevorzugt von 200 bis 3.000 g/mol homogen zugemischt wird.

11. Verfahren nach vorhergehendem Anspruch, **dadurch gekennzeichnet, dass** mindestens ein weiteres Lignin und/oder Ligninderivat mit einem gewichtsgemittelten Molekulargewicht von > 6.000 g/mol, bevorzugt 6.100 g/mol bis 20.000 g/mol der Polymerschmelze zugemischt wird, wobei vorzugsweise in die Polymerschmelze
a) zunächst eine vollständige Zugabe des mindestens einen niedermolekularen Lignins und/oder des niedermolekularen Ligninderivats erfolgt und anschließend eine vollständige Zugabe des mindestens einen weiteren Lignins und/oder Ligninderivats, oder
b) zunächst eine vollständige Zugabe des mindestens einen weiteren Lignins und/oder Ligninderivats erfolgt und anschließend eine vollständige Zugabe des mindestens einen niedermolekularen Lignins und/oder des niedermolekularen Ligninderivats, oder
c) eine abwechselnde Zugabe von Portionen des mindestens einen niedermolekularen Lignins und/oder des niedermolekularen Ligninderivats sowie des mindestens einen weiteren Lignins und/oder Ligninderivats erfolgt.

12. Verfahren nach einem der Ansprüche 10 bis 11, **dadurch gekennzeichnet, dass** die Verarbeitungstemperatur maximal 50 °C, bevorzugt maximal 30 °C, besonders bevorzugt maximal 10 °C über der Schmelztemperatur des thermoplastischen Matrixpolymers oder des Blends mindestens zweier thermoplastischer Matrixpolymeren und/oder maximal 250 °C, bevorzugt maximal 230 °C, besonders bevorzugt maximal 210 °C beträgt.

13. Formkörper, hergestellt aus einem Polymercompound nach einem der Ansprüche 1 bis 9, insbesondere in Form einer Folie oder einer Faser.

14. Verwendung eines Polymercompounds nach einem der Ansprüche 1 bis 9 und/oder eines Formkörpers nach Anspruch 13 als Konstruktionswerkstoff.

## Claims

1. Thermoplastic polymer compound comprising a thermoplastic matrix polymer or a blend of at least two thermoplastic matrix polymers and at least one low-molecular lignin and/or low-molecular lignin derivative having a weight-averaged molecular weight of 200 to 6,000 g/mol,
**characterised in that** the low-molecular lignin and/or the low-molecular lignin derivative in the at least one thermoplastic matrix polymer
a) is present completely dissolved, or
b) is present partially dissolved, the undissolved part of the low-molecular lignin and/or of the low-molecular lignin derivative being present in particulate form, and the average particle sizes of these particles being ≤ 100 nm, preferably 20 nm, further preferred ≤ 20 nm, particularly preferred ≤ 10 nm.

2. Polymer compound according to claim 1, **characterised in that** the low-molecular lignin and/or the low-molecular lignin derivative has a weight-averaged molecular weight of 200 to 5,000 g/mol, preferably of 200 to 4,000 g/mol, particularly preferred of 200 to 3,000 g/mol.

3. Polymer compound according to one of the preceding claims, **characterised in that** at least one further lignin and/or lignin derivative with a weight-averaged molecular weight of > 6,000 g/mol, preferably 6,100 g/mol to 20,000 g/mol is contained, wherein preferably the weight ratio of the totality of the at least one low-molecular lignin and/or low-molecular lignin derivative to the totality of the at least one further lignin and/or lignin derivative is from 1 : 99 to 99 : 1, preferably from 20 : 80 to 80 : 20, particularly preferred from 30 : 70 to 70 : 30.

4. Polymer compound according to one of the preceding claims, **characterised in that** the total lignin content is, relative to the polymer compound, from 0.1 to 80% by weight, preferably from 1 to 70% by weight, further preferred from 5 to 60% by weight, particularly preferred from 10 to 50% by weight, and/or
the glass transition temperature of the at least one low-molecular lignin and/or low-molecular lignin derivative is less than the glass transition temperature or the melting point of the at least one thermoplastic matrix polymer and/or the glass transition temperature of the at least one further lignin and/or lignin derivative.

5. Polymer compound according to one of the preceding claims, **characterised in that** the at least one low-molecular lignin derivative was obtained by partial or complete derivatisation, selected from the group of esterifications, etherifications, urethane formations or combinations of the previously mentioned derivatisations on the hydroxyl groups of a corresponding lignin; wherein preferably
the derivatisation degree relative to the number of OH groups is between 0.1 and 100%, preferably from 0.5 to 100%, and/or
substituents of the derivatives are selected from the group of aliphatic, olefinic and/or aromatic compounds, which can comprise heteroatoms, in particular oxygen, nitrogen, sulphur and/or phosphorus.

6. Polymer compound according to one of the preceding claims, **characterised in that** the thermoplastic matrix polymer is selected from the group consisting of polyamides, in particular AB polyamides (6, 11, 12) and AABB polyamides consisting of dicarboxylic acids with 4, 6, 8, 9, 10, 12, 14, 16, 18 C atoms and diamines with 4, 6, 8, 9, 10, 12, 14, 16, 18 C atoms; polyesters, in particular PET or PLA; polyethers; cellulose or cellulose derivatives; PVC, PVA, vinyl copolymers, polyolefins, in particular PE or PP; polyurethanes; polycarbonates; polyalkylene glycols, in particular PEG; polyvinylpyridine; poly(meth)acrylates, in particular PMMA; polyvinyl alcohols; polyanilines and also combinations or blends of the previously mentioned polymers.

7. Polymer compound according to one of the preceding claims, **characterised in that** at least one adhesive is contained, preferably in a quantity of 0.01 to 10% by weight, further preferred of 0.1 to 5% by weight, further preferred of 0.5 to 3% by weight, in particular of 1 to 2% by weight, wherein preferably
the at least one adhesive is selected from the group consisting of diisocyanates; polymers or copolymers grafted with maleic anhydride, in particular polyethylene, polypropylene, polystyrene, polyisobutene, polyethylene co-vinyl acetate or polyethylene-co-octane, grafted with maleic anhydride, and also mixtures or combinations hereof, preferably the grafting degree of the polymers or copolymers grafted with maleic anhydride being from 0.0001 to 90%, further preferred from 0.1 to 10%, particularly preferred from 3 to 8%, and/or
the adhesive is bonded covalently, in particular via at least one ester-, ether-, amide-, amine-, urethane- or siloxane bond, and/or by semivalent bonds, in particular hydrogen bridge bonds, to the at least one low-molecular lignin and/or low-molecular lignin derivative and/or to the at least one further lignin and/or lignin derivative, and/or
the number-averaged molecular weight of the adhesive is from 100 to 500,000 g/mol, preferably from 500 and 50,000 g/mol, particularly preferred from 1,000 and 10,000 g/mol.

8. Polymer compound according to one of the preceding claims, **characterised in that** the low-molecular lignin, the lignin which forms the basis of the low-molecular lignin derivative, the further lignin and/or the lignin which forms the basis of the further lignin derivative originates from coniferous or deciduous sources and also annual plants and/or was obtained by the kraft process, organosolv process, enzymatic processes or by extractive processes.

9. Polymer compound according to one of the preceding claims, **characterised in that** additives are contained, preferably selected from the group consisting of olfactory substances, substances for minimising olfactory emissions, pigments, colourants, UV- and/or light stabilisers, flame retardants, preservatives, antioxidants, natural fibres and/or synthetic fibres.

10. Method for the production of a polymer compound according to one of the preceding claims, in which a thermoplastic matrix polymer or a blend comprising or consisting of at least two thermoplastic matrix polymers is melted and there are mixed homogeneously into the melt at least one low-molecular lignin and/or low-molecular lignin derivative with a weight-averaged molecular weight of 200 to 6,000 g/mol, preferably of 200 to 5,000 g/mol, further preferred of 200 to 4,000 g/mol, particularly preferred of 200 to 3,000 g/mol.

11. Method according to the preceding claim, **characterised in that** at least one further lignin and/or lignin derivative with a weight-averaged molecular weight of > 6,000 g/mol, preferably 6,100 g/mol to 20,000 g/mol are added to the polymer melt, wherein preferably
in the polymer melt,
a) firstly complete addition of the at least one low-molecular lignin and/or of the low-molecular lignin derivative is effected and subsequently complete addition of the at least one further lignin and/or lignin derivative, or
b) firstly complete addition of the at least one further lignin and/or lignin derivative is effected and subsequently complete addition of the at least one low-molecular lignin and/or of the low-molecular lignin derivative, or
c) alternating addition of portions of the at least one low-molecular lignin and/or of the low-molecular lignin derivative and also of the at least one further lignin and/or lignin derivative is effected.

12. Method according to one of the claims 10 to 11, **characterised in that** the processing temperature is at most 50°C, preferably at most 30°C, particularly preferred at most 10°C above the melting temperature of the thermoplastic matrix polymer or of the blend of at least two thermoplastic matrix polymers and/or at most 250°C, preferably at most 230°C, particularly preferred at most 210°C.

13. Moulded article, produced from a polymer compound according to one of the claims 1 to 9, in particular in the form of a film or a fibre.

14. Use of a polymer compound according to one of the claims 1 to 9 and/or of a moulded article according to claim 13 as a constructional material.

## Revendications

1. Composé polymère thermoplastique, comprenant un polymère de matrice thermoplastique ou un mélange d'au moins deux polymères de matrice thermoplastiques, ainsi qu'une lignine à faible masse moléculaire et/ou un dérivé de lignine à faible masse moléculaire présentant une masse moléculaire moyenne en masse de 200 à 6000 g/mol,
**caractérisé en ce que** la lignine à faible masse moléculaire et/ou le dérivé de lignine à faible masse moléculaire sont, dans l'au moins un polymère de matrice thermoplastique,
a) présents en solution complète, ou
b) présents en solution partielle, la partie non dissoute de la lignine à faible masse moléculaire et/ou du dérivé de lignine à faible masse moléculaire se présentant sous forme particulaire, et la granulométrie moyenne de ces particules étant ≤ 100 nm, de préférence de 20 nm, plus préférentiellement ≤ 20 nm, d'une manière particulièrement préférée ≤ 10 nm.

2. Composé polymère selon la revendication 1, **caractérisé en ce que** la lignine à faible masse moléculaire et/ou le dérivé de lignine à faible masse moléculaire présentent une masse moléculaire moyenne en masse de 200 à 5000 g/mol, de préférence de 200 à 4000 g/mol, d'une manière particulièrement préférée de 200 à 3000 g/mol.

3. Composé polymère selon l'une des revendications précédentes, **caractérisé en ce qu'**il contient au moins une lignine et/ou un dérivé de lignine supplémentaires, présentant une masse moléculaire moyenne en masse > 6000 g/mol, de préférence de 6100 g/mol à 20 000 g/mol,
de préférence le rapport en poids de la somme de l'au moins une lignine à faible masse moléculaire et/ou de l'au moins un dérivé de lignine à faible masse moléculaire à la somme de l'au moins une lignine et/ou de l'au moins un dérivé de lignine supplémentaires étant de 1:99 à 99:1, de préférence de 20:80 à 80:20, d'une manière particulièrement préférée de 30:70 à 70:30.

4. Composé polymère selon l'une des revendications précédentes, **caractérisé en ce que** la teneur totale du composé polymère en lignine est de 0,1 à 80 % en poids, de préférence de 1 à 70 % en poids, plus préférentiellement de 5 à 60 % en poids, d'une manière particulièrement préférée de 10 à 50 % en poids, et/ou
la température de transition vitreuse de l'au moins une lignine à faible masse moléculaire et/ou de l'au moins un dérivé de lignine à faible masse moléculaire est inférieure à la température de transition vitreuse ou au point de fusion de l'au moins un polymère de matrice thermoplastique et/ou à la température de transition vitreuse de l'au moins une lignine et/ou de l'au moins un dérivé de lignine supplémentaires.

5. Composé polymère selon l'une des revendications précédentes, **caractérisé en ce que** l'au moins un dérivé de lignine à faible masse moléculaire a été obtenu par une dérivatisation partielle ou complète, choisie dans le groupe des estérifications, des éthérifications, des formations d'uréthanne ou de combinaisons des dérivatisations mentionnées ci-dessus, réalisée sur les groupes hydroxyle d'une lignine correspondante,
le degré de dérivatisation, rapporté au nombre des groupes OH, étant de préférence compris entre 0,1 et 100 %, de préférence entre 0,5 et 100 %, et/ou
les substituants des dérivés étant choisis dans le groupe des composés aliphatiques, oléfiniques et/ou aromatiques, qui peuvent contenir des hétéroatomes, en particulier de l'oxygène, de l'azote, du soufre et/ou du phosphore.

6. Composé polymère selon l'une des revendications précédentes, **caractérisé en ce que** le polymère de matrice thermoplastique est choisi dans le groupe consistant en les polyamides, en particulier les polyamides AB (6, 11, 12) et les polyamides AABB, constitués d'acides dicarboxyliques ayant 4, 6, 8, 9, 10, 12, 14, 16, 18 atomes de carbone et de diamines ayant 4, 6, 8, 9, 10, 12, 14, 16, 18 atomes de carbone ; les polyesters, en particulier le PET ou le PLA ; les polyéthers ; la cellulose ou les dérivés de la cellulose ; le PVC, le PVA, les copolymères vinyliques, les polyoléfines, en particulier le PE ou le PP ; les polyuréthannes ; les polycarbonates ; les polyalkylèneglycols, en particulier le PEG ; la polyvinylpyridine ; les poly(méth)acrylates, en particulier le PMMA ; les poly(alcools vinyliques) ; les polyanilines, ainsi que les combinaisons ou mélanges des polymères mentionnés ci-dessus.

7. Composé polymère selon l'une des revendications précédentes, **caractérisé en ce qu'**il contient au moins un promoteur d'adhérence, de préférence en une quantité de 0,01 à 10 % en poids, plus préférentiellement de 0,1 à 5 % en poids, plus préférentiellement de 0,5 à 3 % en poids, en particulier de 1 à 2 % en poids,
de préférence l'au moins un promoteur d'adhérence étant choisi dans le groupe consistant en les diisocyanates ; les polymères ou copolymères greffés à greffons anhydride maléique, en particulier le polyéthylène, le polypropylène, le polystyrène, le polyisobutène, le polyéthylène-co-acétate de vinyle ou le polyéthylène-co-octane greffé à greffons anhydride maléique, ainsi que les mélanges ou les combinaisons de ceux-ci, de préférence le degré de greffage des polymères ou copolymères greffés à greffons anhydride maléique étant de 0,0001 à 90 %, plus préférentiellement de 0,1 à 10 %, d'une manière particulièrement préférée de 3 à 8 %, et/ou
le promoteur d'adhérence étant lié par liaison covalente, en particulier par l'intermédiaire d'au moins une liaison ester, éther, amide, amine, uréthanne ou siloxane et/ou par des liaisons de valence secondaire, en particulier des liaisons par pont hydrogène, à l'au moins une lignine à faible masse moléculaire et/ou à l'au moins un dérivé de lignine à faible masse moléculaire et/ou à l'au moins une lignine et/ou à l'au moins un dérivé de lignine supplémentaires, et/ou
la masse moléculaire moyenne en nombre du promoteur d'adhérence étant de 100 à 500 000 g/mol, de préférence de 500 à 50 000 g/mol, d'une manière particulièrement préférée de 1000 à 10 000 g/mol.

8. Composé polymère selon l'une des revendications précédentes, **caractérisé en ce que** la lignine à faible masse moléculaire, la lignine qui est à la base du dérivé de lignine à faible masse moléculaire, la lignine supplémentaire et/ou la lignine qui est à la base du dérivé de lignine supplémentaire, proviennent de sources de bois résineux ou feuillu, ainsi que de plantes annuelles, et/ou ont été obtenues par le procédé Kraft, le procédé Organosolv, des procédés enzymatiques ou par des procédés par extraction.

9. Composé polymère selon l'une des revendications précédentes, **caractérisé en ce qu'**il contient des additifs, choisis de préférence dans le groupe consistant en les substances olfactives, les substances destinées à minimiser les émissions olfactives, les pigments, les colorants, les stabilisants UV et/ou photostabilisants, les agents d'ignifugation, les conservateurs, les antioxydants, les fibres naturelles et/ou les fibres artificielles.

10. Procédé de fabrication d'un composé polymère selon l'une des revendications précédentes, dans lequel on fait fondre un polymère de matrice thermoplastique ou un mélange contenant au moins deux polymères de matrice thermoplastiques ou en étant constitué, et on ajoute à la masse fondue, en mélangeant jusqu'à homogénéité, au moins une lignine à faible masse moléculaire et/ou au moins un dérivé de lignine à faible masse moléculaire présentant une masse moléculaire moyenne en masse de 200 à 6000 g/mol, de préférence de 200 à 5000 g/mol, plus préférentiellement de 200 à 4000 g/mol, d'une manière particulièrement préférée de 200 à 3000 g/mol.

11. Procédé selon la revendication précédente, **caractérisé en ce qu'**on ajoute et mélange une lignine et/ou un dérivé de lignine supplémentaires, présentant une masse moléculaire moyenne en masse > 6000 g/mol, de préférence de 6100 g/mol à 20 000 g/mol, à la masse fondue de polymère, dans lequel, de préférence,
a) on procède d'abord à une addition complète, à la masse fondue de polymère, de l'au moins une lignine à faible masse moléculaire et/ou du dérivé de lignine à faible masse moléculaire, puis à une addition complète de l'au moins une lignine et/ou de l'au moins un dérivé de lignine supplémentaires, ou
b) on procède d'abord à une addition complète, à la masse fondue de polymère, de l'au moins une lignine et/ou de l'au moins un dérivé de lignine supplémentaires, puis à une addition complète de l'au moins une lignine à faible masse moléculaire et/ou du dérivé de lignine à faible masse moléculaire, ou
c) on procède à une addition en alternance, à la masse fondue de polymère, de portions de l'au moins une lignine à faible masse moléculaire et/ou du dérivé de lignine à faible masse moléculaire ainsi que de l'au moins une lignine et/ou de l'au moins un dérivé de lignine supplémentaires.

12. Procédé selon l'une des revendications 10 à 11, **caractérisé en ce que** la température de mise en oeuvre est au maximum de 50 °C, de préférence au maximum de 30 °C, d'une manière particulièrement préférée au maximum de 10 °C supérieure à la température de fusion du polymère de matrice thermoplastique ou du mélange d'au moins deux polymère de matrice thermoplastiques, et/ou est au maximum de 250 °C, de préférence au maximum de 230 °C, d'une manière particulièrement préférée au maximum de 210 °C .

13. Objet moulé, fabriqué à partir d'un composé polymère selon l'une des revendications 1 à 9, en particulier sous forme d'une feuille ou d'une fibre.

14. Utilisation d'un composé polymère selon l'une des revendications 1 à 9 et/ou d'un objet moulé selon la revendication 13 en tant que matériau de construction.
